# EUROPEAN PATENT SPECIFICATION

(11) **EP 1 348 616 B1**
(45) Date of publication and mention of the grant of the patent: **13.12.2006**
(21) Application number: 03005954.7
(22) Date of filing: 17.03.2003
(51) Int. Cl.: B62J 27/00

(54) **Compact vehicle**
Kompakt- Fahrzeug
Véhicule compact

(30) Priority: 26.03.2002 JP 2002085680
(43) Date of publication of application: 01.10.2003
(73) Proprietor: HONDA GIKEN KOGYO KABUSHIKI KAISHA, Minato-ku, Tokyo (JP)
(72) Inventor: Yamamoto, Takenori, K. K. Honda Gijutsu Kenkyusho, Wako-shi, Saitama (JP); Kurata, Norihiro, K. K. Honda Gijutsu Kenkyusho, Wako-shi, Saitama (JP); Yamazaki, Takeshi, K. K. Honda Gijutsu Kenkyusho, Wako-shi, Saitama (JP)
(74) Representative: Liska, Horst

(56) References cited:
- DE-A1- 19 836 304
- DE-A1- 19 913 906
- GB-A- 2 130 150
- US-A- 4 972 595
- US-A- 5 938 231
- US-A- 5 967 545

## Description

The present invention relates to a compact vehicle provided with a seat provided to the rear of a vehicle body and an air bag that can constrain a rider on the seat from a forward direction when the air bag is inflated and extended.

Such a compact vehicle is disclosed in Japanese published unexamined patent application No. 2001-219884 for example, or in the closest prior art GB 2130150.

In a four-wheel vehicle, to enhance impact absorption effect by an inflated and extended air bag, a seat belt made tense by the action of impact is required to be used together and in a compact vehicle such as a motorcycle, it is also considered that the effect of an air bag can be more enhanced by using a seat belt disclosed in Japanese published unexamined patent application No. Hei8-239073. However, in the compact vehicle such as a motorcycle, secondary motion such as an overturn and a skid after collision and secondary collision may be caused and when such secondary motion is caused, it is desirable that constraint by a seat belt is released.

The invention is made in view of such a situation and the object is to provide a compact vehicle in which to more enhance impact absorption effect by an air bag, a rider is constrained by a seat belt and when secondary motion is caused in relation to a vehicle body, the constraint of the rider can be released.

To achieve the object, the invention according to claim 1 provides a compact vehicle provided with a seat provided to the rear of a vehicle body and an air bag that can constrain a rider on the seat from a forward direction when the air bag is inflated and extended, wherein: one end of a seat belt that can be wound onto the waist of the rider on the seat is coupled to the vehicle body via a retractor provided with a locking function in emergency; and between the other end of the seat belt and the vehicle body a coupling means is provided in which coupling and the release of coupling can be switched manually and the coupling is automatically released when a predetermined time elapses since the air bag is inflated and extended.

According to such configuration, when the air bag is inflated and extended because of the collision of the compact vehicle, the rider is constrained by the seat belt made tense when the retractor is locked by keeping the coupling means in the coupled state by manual operation and impact can be effectively relieved because the inflated and extended air bag receives the rider constrained by the seat belt. In addition, as the coupling of the coupling means is automatically released when predetermined time elapses since the air bag is inflated and extended, the constraint of the rider by the seat belt is released.

As described above, according to the invention according to Claim 1, the inflated and extended air bag receives the rider constrained by the seat belt and impact can be effectively relieved respectively by keeping the coupling means in the coupled state by manual operation and in addition, when secondary motion is caused in relation to the vehicle body, the constraint of the rider on the vehicle body can be released.

Besides, the invention according to Claim 2 is based upon the configuration according to the invention according to Claim 1 and is characterized in that the coupling of the coupling means is released when an overturn detection sensor for detecting the overturn of the vehicle body detects the overturn. According to such configuration, when the motorcycle individually overturns because of a cause except collision, the constraint of the rider on the vehicle body, which may cause a skid or secondary collision can be released.

Besides, according to the invention according to Claim 2, when the motorcycle individually overturns because of a cause except collision, the constraint of the rider on the body, which may cause a skid or secondary collision can be released.

Embodiments of the invention shown in the attached drawings will be described below.
Fig. 1 is a side view showing a motorcycle equivalent to a first embodiment;
Fig. 2 is an enlarged longitudinal section viewed from direction shown by an arrow 2 in Fig. 1;
Fig. 3 is a sectional view corresponding to Fig. 2 when an air bag is inflated and extended;
Fig. 4 shows the simple configuration of a seat belt;
Fig. 5 is a side view showing the motorcycle in a state in which predetermined time elapses after the air bag is inflated and extended; and
Fig. 6 is a side view showing a motorcycle equivalent to a second embodiment.

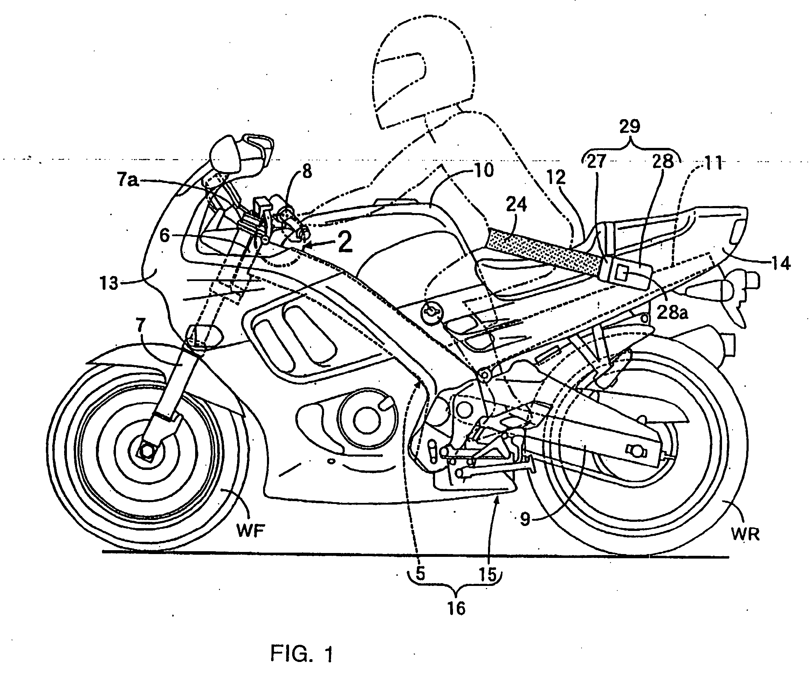

Figs. 1 to 5 show a first embodiment of the invention,

First as shown in Fig. 1, a front fork 7 for supporting a front wheel WF is supported by a head pipe 6 with which a body frame 5 of the motorcycle is provided at its front end so that the front fork can be steered and a steering handlebar 8 is attached to a top bridge 7a with which the front fork 7 is provided on the upside of it. A swing arm 9 is supported by the rear of the body frame 5 so that the swing arm can be vertically oscillated and a rear wheel WR is supported by the rear end of the swing arm 9.

A fuel tank 10 is mounted on a front half of the body frame 5 and a tandem type seat 12 arranged at the back of the fuel tank 10 is provided on a seat rail 11 with which the body frame 5 is provided in the rear of the body frame.

Most of the body frame 5 is covered with a body cover 15 made of synthetic resin and forming a vehicle body 16 together with the body frame 5 and the body cover 15 is composed of a front cowl 13 and a rear cowl 14.

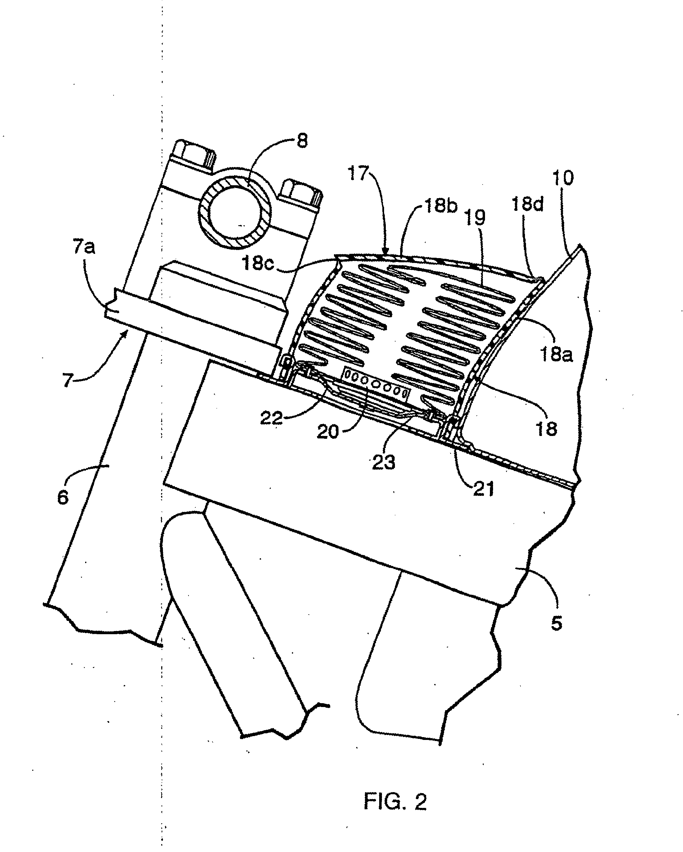

As shown in Fig. 2, an air bag module 17 is provided on the body frame 5 between the head pipe 6 and the fuel tank 10 for example, and the air bag module 17 is provided with an air bag housing 18, an air bag 19 housed in the air bag housing 18 and an inflator 20 that generates gas for inflating and extending the air bag 19.

The air bag housing 18 is provided with a housing barrel 18a that can house the air bag 19 in a folded state and a flap 18b that closes an opening at the upper end of the housing barrel 18a, is formed by light material made of synthetic resin like a cap and the downside of the housing barrel 18a is attached to the body frame 5 by an attachment piece 21 fixed to the body frame 5.

The flap 18b is coupled to the housing barrel 18a via a hinge 18c arranged in one location around the flap 18b, for example in one location on the side reverse to the fuel tank 10 and a weak part 18d arranged in a part except the hinge 18c around the flap 18b, and the weak part 18d is formed so that it can be easily burst.

An opening 22 of the air bag 19 is airtightly closed by a connector 23 fixed to the attachment piece 21 and the inflator 20 is attached to the inside of the connector 23.

A shock sensor (not shown) such as an acceleration sensor is attached to the body frame 5, the inflator 20 is operated when the shock sensor detects shock equal to or exceeding a predetermined value and supplies high-pressure gas into the air bag 19.

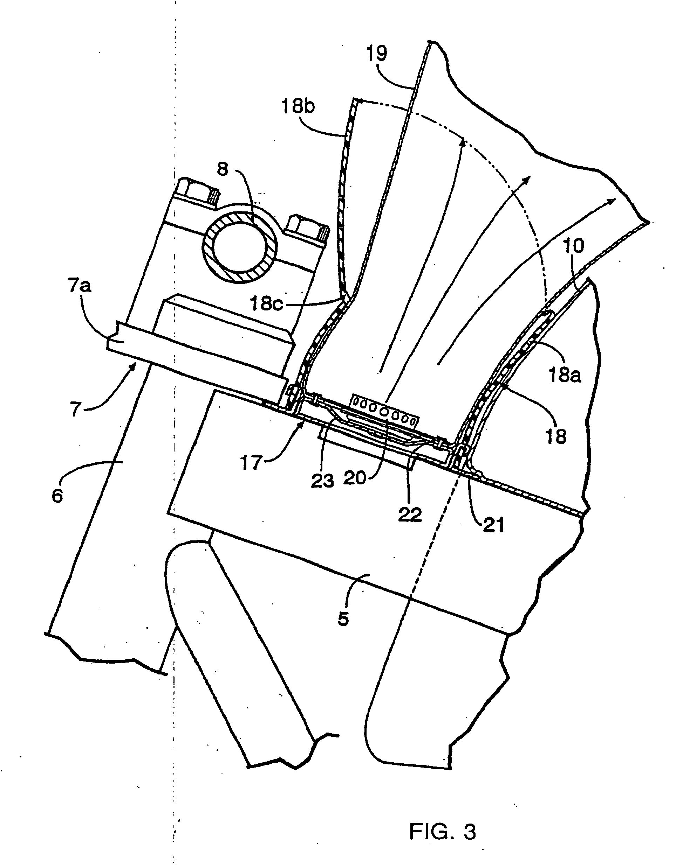

When the high-pressure gas is supplied from the inflator 20, the air bag 19 bursts the weak part 18d of the air bag housing 18, momentarily inflates and extends upward, opening the flap 18b as shown in Fig. 3 and a rider seated on the seat 12 is constrained by the inflated and extended air bag 19 from a forward direction.

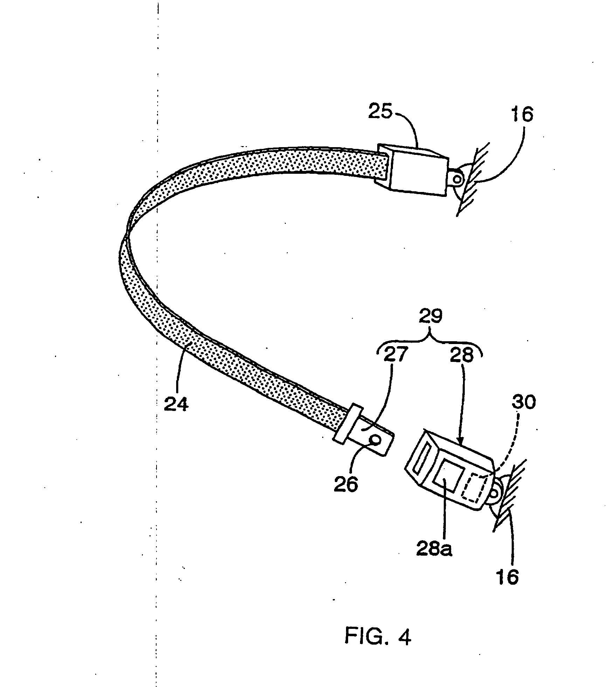

The motorcycle is provided with the seat belt 24 wound onto the waist of the rider to constrain the rider on the seat 12 on the vehicle body 16 and as shown in Fig. 4, one end of the seat belt 24 is coupled to the vehicle body 16 via a retractor 25 provided with a locking function in emergency set so that the retractor is turned a locked state by the action of excessive impact caused by collision and others.

A tongue 27 provided with a fitting hole 26 is fixed to the other end of the seat belt 24 and a buckle 28 forming coupling means 29 provided between the other end of the seat belt 24 and the vehicle body 16 together with the tongue 27 is provided on the side of the vehicle body 16. The other end of the seat belt 24 is coupled to the vehicle body 16 when the side of the buckle 28 is fitted to the fitting hole 26 by inserting the tongue 27 into the buckle 28, the fitting of the side of the buckle 28 to the fitting hole 26 is released by pressing an operating part 28a with which the buckle 28 is provided, and coupling between the other end of the seat belt 24 and the vehicle body 16 is released. That is, the coupling means 29 couples the other end of the seat belt 24 and the vehicle body 16 by the coupling by manual operation.

In addition, on the side of the buckle 28 of the coupling means 29, an actuator 30 for releasing coupling without manual operation when the coupling means 29 is in a coupled state is provided, and the actuator 30 is actuated when predetermined time elapses since the air bag 19 is inflated and extended in the coupled state, for example when 0.5 second elapses since the inflator 20 is actuated and releases the coupling of the coupling means 29.

Next, to explain the action of the first embodiment, one end of the seat belt 24 that can be wound onto the waist of the rider on the seat 12 is coupled to the vehicle body 16 via the retractor 25 provided with the locking function in emergency and the coupling means 29 in which coupling and the release of coupling can be switched manually and in the coupled state, coupling is automatically released when predetermined time (for example, 0.5 second) elapses since the air bag 19 is inflated and extended is provided between the other end of the seat belt 24 and the vehicle body 16.

Therefore, as the retractor 25 is locked by keeping the coupling means 29 in the coupled state by manual operation when the air bag 19 is inflated and extended by the collision of the motorcycle and others, the rider is constrained by the seat belt 24 made tense when the retractor is locked, the rider is received by the inflated and extended air bag 19 and impact can be effectively relieved.

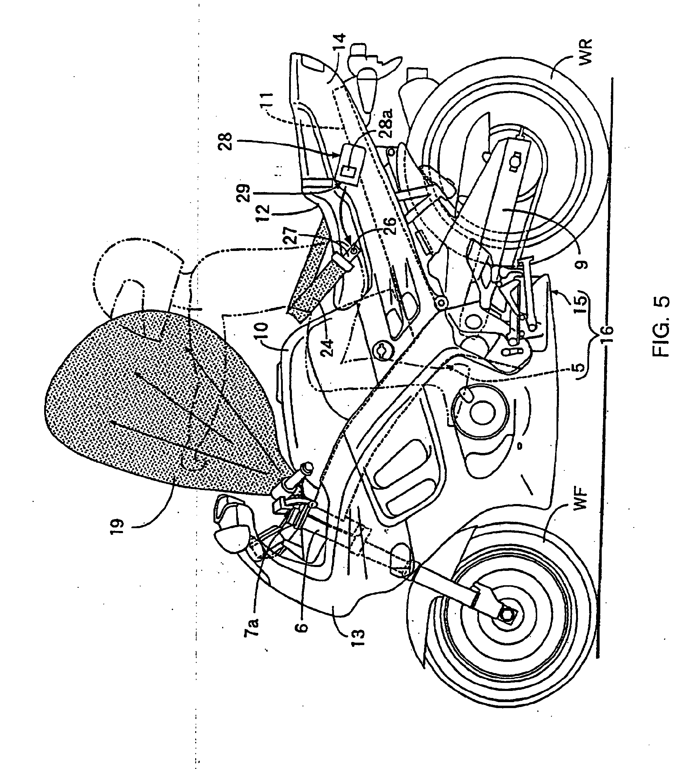

In addition, as the coupling means 29 automatically releases coupling as shown in Fig. 5 and the tongue 27 is withdrawn from the buckle 28 when predetermined time elapses since the air bag 19 is inflated and extended, the constraint of the rider by the seat belt 24 is released.

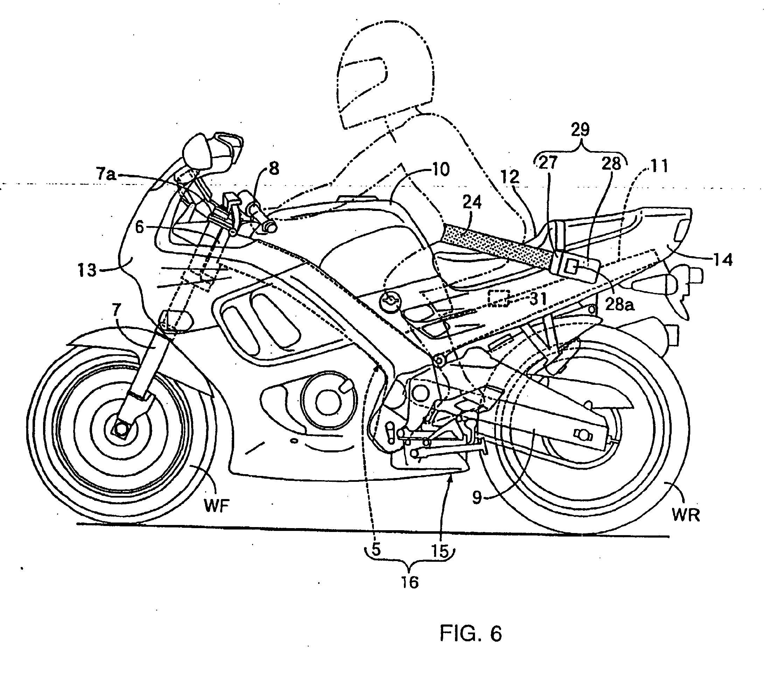

Fig. 6 shows a second embodiment of the invention and the same reference number is allocated to a part corresponding to that in the first embodiment.

For example, an overturn detection sensor 31 formed by an inclination sensor or a lateral acceleration sensor is attached to the center in a direction of the width of the body 16 under the seat 12 and the overturn of the body 16 is detected by the overturn detection sensor 31.

In addition, the coupling means 29 is configured so that it releases coupling when the overturn detection sensor 31 detects the overturn.

According to the second embodiment, when the motorcycle individually overturns because of a cause except collision, the constraint of the rider on the vehicle body 16, which may cause a skid or secondary collision can be released.

The invention can be widely applied not only to the motorcycle described in the embodiments but to a compact vehicle such as a scooter-type motorcycle and a three-wheeled vehicle.

This is to constrain a rider by a seat belt to more enhance impact absorption effect by an air bag and to release the constraint of the rider when secondary motion is caused in relation to a vehicle body in a compact vehicle provided with a seat provided to the rear of the vehicle body and the air bag that can constrain the rider on the seat from a forward direction when the air bag is inflated and extended.

To achieve this, one end of a seat belt 24 that can be wound onto the waist of a rider on a seat 12 is coupled to a body 16 via a retractor provided with a locking function in emergency, and between the other end of the seat belt 24 and the vehicle body 16 a coupling means 29 is provided in which coupling and the release of coupling can be switched manually and in the coupled state, the coupling is automatically released when a predetermined time elapses since an air bag 19 is inflated and extended.

## Claims

1. A compact vehicle provided with a seat (12) provided to the rear of a vehicle body (16) and an air bag (19) that can constrain a rider on the seat (12) from a forward direction when the air bag is inflated and extended, **characterized in that**:
one end of a seat belt (24) that can be wound onto the waist of the rider on the seat (12) is coupled to the vehicle body (16) via a retractor (25) provided with a locking function in emergency; and
between the other end of the seat belt (24) and the vehicle body (16) a coupling means (29) is provided in which coupling and the release of coupling can be switched manually and the coupling is automatically released when a predetermined time elapses since the air bag (19) is inflated and extended.

2. A compact vehicle according to claim 1, wherein:
the coupling means (29) releases coupling when an overturn detection sensor (31) for detecting the overturn of the vehicle body (16) detects the overturn.

## Patentansprüche

1. Kompaktfahrzeug, versehen mit einem Sitz (12), der zum Heck eines Fahrzeugrumpfs (16) vorgesehen ist, und einem Airbag (19), der einen Fahrer auf dem Sitz (12) von einer vorwärtigen Richtung her zurückhalten kann, wenn der Airbag aufgeblasen und entfaltet ist,
**dadurch gekennzeichnet, dass**:
ein Ende eines Sicherheitsgurts (24), der auf die Hüfte des Fahrers auf dem Sitz (12) gelegt werden kann, mit dem Fahrzeugrumpf (16) über einen Retraktor (25) gekoppelt ist, der mit einer Notfallarretierfunktion versehen ist; und
zwischen dem anderen Ende des Sicherheitsgurts (24) und dem Fahrzeugrumpf (16) ein Kupplungsmittel (29) vorgesehen ist, in dem das Kuppeln und das Lösen der Kupplung manuell geschaltet werden kann und die Kupplung automatisch gelöst wird, wenn seit dem Aufblasen und Entfalten des Airbags (19) eine vorbestimmte Zeit abläuft.

2. Kompaktfahrzeug nach Anspruch 1, worin:
das Kupplungsmittel (29) die Kupplung löst, wenn ein Überschlagerfassungssensor (31) zum Erfassen des Überschlags des Fahrzeugrumpfs (16) den Überschlag erfasst.

## Revendications

1. Véhicule compact muni d'un siège (12) prévu à l'arrière d'un corps de véhicule (16) et d'un airbag (19) qui peuvent protéger un occupant situé sur le siège (12) contre tout mouvement vers l'avant lorsque l'airbag est gonflé et développé, **caractérisé en ce que** :
une extrémité d'une ceinture de sécurité (24) qui peut être enroulée sur la taille de l'occupant situé sur le siège (12) est couplée au corps du véhicule (16) via un enrouleur (25) muni d'une fonction de verrouillage en cas d'urgence ; et
entre l'autre extrémité de la ceinture de sécurité (24) et le corps du véhicule (16), un moyen de couplage (29) est prévu, dans lequel le couplage et la libération du couplage peuvent être effectués manuellement et le couplage est automatiquement libéré lorsqu'une durée prédéterminée s'est écoulée à partir du moment où l'airbag (19) s'est gonflé et développé.

2. Véhicule compact selon la revendication 1, dans lequel :
le moyen de couplage (29) libère le couplage lorsqu'un capteur de détection de retournement (31) destiné à détecter le retournement du corps du véhicule (16) détecte le retournement.
